(19) Europäisches Patentamt
European Patent Office
Office européen des brevets

(11) Publication number: **0 310 680**
**A1**

(12) # EUROPEAN PATENT APPLICATION

published in accordance with Art. 158(3) EPC

(21) Application number: **88903378.3**

(51) Int. Cl.[3]: **G 11 B 11/10**

(22) Date of filing: **15.04.88**

Data of the international application taken as a basis:

(86) International application number:
**PCT/JP88/00379**

(87) International publication number:
**WO88/08192 (20.10.88 88/23)**

(30) Priority: **17.04.87 JP 94799/87**
**17.04.87 JP 94800/87**
**18.05.87 JP 118958/87**
**18.05.87 JP 118959/87**
**29.05.87 JP 131265/87**
**01.06.87 JP 134829/87**
**28.09.87 JP 242933/87**
**28.09.87 JP 242934/87**
**28.09.87 JP 242935/87**
**28.09.87 JP 242936/87**
**28.09.87 JP 242937/87**
**20.11.87 JP 294327/87**

(43) Date of publication of application:
**12.04.89 *Bulletin* 89/15**

(84) Designated Contracting States:
**AT BE CH DE FR GB IT LI LU NL SE**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **MIZUMOTO, Kunihiko**
**5, Yusyudai-nishi 2-chome Ichihara-shi**
**Chiba 299-01(JP)**

(72) Inventor: **HARUTA, Koichi**
**5, Yusyudai-nishi 2-chome Ichihara-shi**
**Chiba 299-01(JP)**

(72) Inventor: **KAJIURA, Hirokazu**
**5, Yusyudai-nishi 2-chome Ichihara-shi**
**Chiba 299-01(JP)**

(74) Representative: **Myerscough, Philip Boyd et al,**
**J.A.Kemp & Co. 14, South Square Gray's Inn**
**London, WC1R 5EU(GB)**

(54) **PHOTOMAGNETIC RECORDING MEMBRANE.**

(57) This invention provides a photomagnetic recording membrane which contains: (i) Pt and/or Pd; (ii) rare earth element (RE); and (iii) Fe and/or Co, with Pt and/or Pd being present in an amount of more than 10 atomic % to 30 atomic % or below, Fe and/or Ce being present in an amount of 40 atomic % or above to 70 atomic % or below, and Co/(Fe+Co) (by atomic ratio) being 0 to 0.3. This membrane has an excellent oxidation resistance, can be used for a long time, shows a large C/N and a low noise level, and has excellent bias magnetic field dependence.

EP 0 310 680 A1

./...

FIG.1

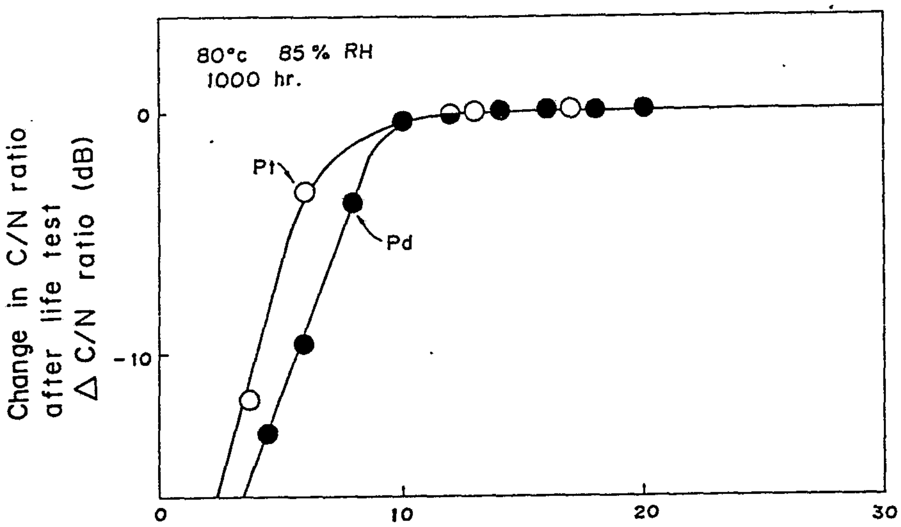


(Notes) In the figure above, the mark of ◒ denotes a point at which Pt bearing the mark of ○ coincides with Pd bearing the mark of ●

## TITLE

# MAGNETOOPTICAL RECORDING FILMS

## FIELD OF THE INVENTION

This invention relates to magnetooptical recording films having excellent resistance to oxidation and excellent magnetooptical recording characteristics and more particularly to magnetooptical recording films having an easy axis of magnetization perpendicular to the film as well as excellent resistance to oxidation and excellent magnetooptical recording characteristics.

## BACKGROUND OF THE INVENTION

It is known that magnetooptical recording films comprising transition metals such as iron, cobalt, etc. and rare earth elements such as terbium (Tb), gadolinium (Gd), etc., have an easy axis of magnetization perpendicular to the film and are capable of forming a small inverse magnetic domain with magnetization antiparallel to the magnetization of the film. By corresponding the existence or nonexistence of this inverse magnetic domain to "1" or "0", it becomes possible to record a digital signal on such magnetooptical recording films as mentioned above.

As magnetooptical recording films composed of such transition metals and rare earth elements as mentioned above, there are disclosed those of Tb-Fe system containing 15-30 atom% of Tb, for example, in Japanese Patent Publication No. 20691/1982. There are also used magnetooptical recording films of Tb-Co system to which a third component metal has been added. Furthermore, magnetooptical recording films of Tb-Fe system, Tb-Fe-Co system and the like are known as well.

Though these magnetooptical recording films have excellent recording reproducing characteristics, they still involved such a serious problem from a practical standpoint that they are subject to oxidation in the course of ordinary use thereof and their characteristics come to change with the lapse of time.

The mechanism of oxidation deterioration of magnetooptical recording films containing such transition metals and rare earth elements as mentioned above is discussed, for example, in Journal of Applied Magnetism Society of Japan, Vol.9, No.2, pp.93-96, and this paper reports that this mechanism of oxidative deterioration may be classified into three types as mentioned below.

a) Hole corrosion

By hole corrosion is meant the occurrence of pinholes in the magnetooptical recording film. This corrosion proceeds mainly under the circumstances of high humidity, and it markedly proceeds, for example, in the recording films of such system as Tb-Fe, Tb-Co or the like.

b) Surface oxidation

Surface oxide layers are formed on magnetooptical recording films, whereby Kerr-rotation angle $\theta$k of the films changes with time and eventually comes to decrease.

c) Selective oxidation of rare earth element

Rare earth elements present in magnetooptical recording films are selectively oxidized, thereby coercive force Hc of the films comes to largely change with time.

Various attempts have heretofore been made to inhibit such oxidative deterioration of magnetooptical recording films as mentioned above. For instance, there is proposed a procedure in which a magnetooptical recording film is designed to have a three-layer structure wherein the film is sandwitched between anti-oxidizing protective layers such as those of $Si_3N_4$, SiO, $SiO_2$, AlN, etc. The anti-oxidizing protective layers as proposed above, however, involved such problems that they are relatively expensive and, at the same time, they require much time and labor to be formed on magnetooptical recording films, and that a sufficient inhibition of oxidative deterioration of the recording films is not always expected even when such anti-oxidizing protective layers are formed on said recording films.

Furthermore, various attempts are being made to improve resistance to oxidation of magnetooptical recording films by incorporating a third component metal into the recording films.

For instance, Journal of Applied Magnetism Society of Japan cited above discloses an attempt to improve resistance to oxidation of magnetooptical recording films of Tb-Fe or Tb-Co system by incorporation into the films of such third component metal as Co, Ni, Pt, Al, Cr, Ti and Pd in an amount of up to 3.5 atom%. In connection with the attempt, the said Journal reports that the incorporation of small amounts of Co, Ni and Pt into Tb-Fe or Tb-Co is effective in inhibiting the surface oxidation and hole corrosion of the resulting magnetooptical recording film but has no effect on inhibition of the selective oxidation of Tb contained as a rare earth element in this magnetooptical recording film. This disclosure means that when small amounts of Co, Ni and Pt are added to Tb-Fe or Tb-Co, Tb present in the resulting magnetooptical recording film is selectively oxidized, and coercive force Hc of the film largely changes. Thus, even when small amounts up to 3.5 atom% of Co, Ni and Pt are added to Tb-Fe or Tb-Co, no sufficient improvement in resistance to oxidation of the resulting magnetooptical recording film is made.

With the view of improving resistance to oxidation of magnetooptical recording films, a teaching on the magnetooptical recording films which are obtained by adding Pt, Al, Cr and Ti in an amount up to 10 atom% to Tb-Fe or Tb-Fe-Co is disclosed in page 209 of the Proceedings of The Nineth Conference of Applied Magnetism Society of Japan (November 1985). Even when Pt, Al, Cr and Ti in an amount up to 10 atom% are added to Tb-Fe or Tb-Fe-Co, however, inhibition of selective oxidation of Tb present in the resulting magnetooptical recording films is not sufficient, though the surface oxidation and hole corrosion can be inhibited to a fairly effective extent. Thus, there was still left such a problem that coercive force Hc of the resultant magnetooptical recording films will largely change with time, and eventually the coercive force Hc will largely decreases.

Japanese Patent L-O-P Publn. No. 255546/1986 discloses magnetooptical recording films which have been improved in resistance to oxidation by adding such noble metal elements as Pt, Au, Ag, Ru, Rh, Pd, Os and Ir within such range that Kerr-rotation angle necessary for regeneration is to magnetooptical recording films comprising rare earth elements and transition metals, obtained.

Furthermore, Japanese Patent L-O-P Publn. No. 7806/1983 discloses magnetooptical recording films comprising polycrystalline thin films having the composition of PtCo in which Pt is contained in an amount of 10-30 atom%.

However, the above-mentioned polycrystalline thin films having this composition of PtCo involved such problems that said polycrystalline thin films as formed require heat treatment such as annealing because that are polycrystalline, that particle-particle boundaries among the crystals sometimes appear as noise signals, and that these polycrystalline thin films are high in Curie point.

In the manner as described above, magnetooptical recording films comprising Tb-Fe or Tb-Co and further incorporated with such third metal components as Co, Ni, Pt, Al, Cr, Ti and Pd have heretofore been known. However, these known magnetooptical recording films involve at least one of such problems that they are not sufficient in resistance to oxidation, small in C/N ratio and high in noise level, and that no high C/N ratio can be obtained unless a large bias magnetic field is applied (i.e. they are poor in bias magnetic field dependability).

With the purpose of providing magnetooptical recording films which are excellent in resistance to oxidation, usable over a long period of time, high in C/N ratio and low in noise level and, moreover, excellent in such bias magnetic field dependability that a sufficiently high C/N ratio is obtained even in a small bias field, the present inventors prosecuted extensive researches and eventually have accomplished the present invention on the basis of their finding that magnetooptical recording films which contain specific amounts of Pt and/or Pd, specific amounts of Fe and/or Co and also rare earth elements such as Tb will exhibit excellent magnetooptical recording characteristics.

## DISCLOSURE OF THE INVENTION

The magnetooptical recording films of the present invention are characterized by containing

(i) Pt and/or Pd,

(ii) rare earth element (RE), and

(iii) Fe and/or Co, said Pt and/or Pd being present in an amount of more than 10 atom% but not more than 30 atom%, said Fe and/or Co being present in an amount of at least 40 atom% but not more than 70 atom%, and having a Co/(Fe + Co) ratio [atomic ratio] of 0-0.3.

The present magnetooptical recording films are excellent in resistance to oxidation, usable over a long period of time, large in C/N ratio and low in noise level and, moreover, excellent in bias magnetic field dependability.

## BRIEF DESCRIPTION OF THE DRAWINGS

Fig. 1 is a graph showing the relationship between the content (atom%) of Pt and/or Pd in a magnetooptical recording film and resistance to oxidation (ΔC/N ratio). Fig. 2 is a graph showing the relationship between bias magnetic field (Oe) and C/N ratio of a magnetooptical recording film. Fig. 3 is a graph showing the relationship between the content (atom%) of Pt and/or Pd and minimum bias magnetic field (Hsat. (Oe) ) in a magentooptical recording film. Fig. 4 is a graph showing the relationship between the CO/(Fe + Co) ratio [atomic ratio] and noise level (dBm) in a magnetooptical recording film containing Pt. Fig. 5 is a graph showing the relationship between the Co/(Fe + Co) ratio [atomic ratio] and noise level (dBm) in a magnetooptical recording film containing Pd. Fig. 6 is a graph showing the relationship between the Co/(Fe + Co) ratio [atomic ratio] and erasion deterioration (ΔC/N ratio (dB) ) in a magnetooptical recording film.

All of the magnetooptical discs in Figs. 1-6 is a single layer of 1000 Å.

## BEST MODE OF PRACTICING THE INVENTION

The magnetooptical recording films of the present invention are illustrated below in detail.

The present magnetooptical recording films contain as essential components the following components

(i) Pt and/or Pd,

(ii) a rare earth element, and

(iii) Fe and/or Co.

Furthermore, it is preferable that the present magnetooptical recording films are amorphous when measured by the wide-angle X-ray diffraction method.

(i) Pt and/or Pd

The present magnetooptical recording films contain Pt or Pd, or both, and the amount of Pt and/or Pd contained in the magnetooptical recording films is more than 10 atom% but not more than 30 atom%, preferably more than 10 atom% but less than 20 atom%, and more preferably at least 11 atom% but not more than 19 atom%.

The presence in the magnetooptical recording film of Pt and/or Pd in an amount exceeding 10 atom% brings about such advantages that resistance to oxidation of said recording film becomes excellent, no hole corrosion occurs and C/N ratio becomes low in the recording film.

Fig. 1 shows the relationship between the content of Pt and/or Pd in the magnetooptical recording film and C/N ratio when said recording film is retained for 1000 hours under the circumstances of 85% RH and 80°C.

It is thus understood from Fig. 1 that when the amount in the magnetooptical recording film of Pt and/or Pd exceeds 10 atom%, resistance of said recording film improves, no hole corrosion occurs even after a long-term use and also C/N ratio will not deteriorate.

For instance, the magnetooptical recording film of the present invention having the composition represented by $Pt_{13}Tb_{28}Fe_{50}Co_{9}$ or $Pd_{12}Tb_{28}Fe_{53}Co_{7}$ will not change in C/N ratio at all even when it is retained under the circumstance of 85% RH and 80°C. In contrast thereto, a magnetooptical recording film having the composition represented by $Tb_{25}Fe_{68}Co_{7}$ but containing no Pt or Pd will greatly decrease in C/N ratio when it is retained for 1000 hours under the circumstances of 85% RH and 80°C.

By incorporation into a magnetooptical recording film of Pt and/or Pd in an amount within the range as specified above, a sufficiently high C/N ratio can be obtained even by a small bias magnetic field when an information is recorded on the magnetooptical recording film or when the information recorded is read out therefrom. If a sufficiently high C/N ratio is obtained by a small bias magnetic field, a magnet for producing a bias magnetic field can be made small in size and, moreover, heat generation from the magnet can be inhibited and hence simplification of a driving device for an optical disc bearing the magnetooptical recording film thereon is made possible. Moreover, because a sufficiently large C/N ratio is obtained by a small bias magnetic field, it becomes easy to design a magnet for magnetic field modulation recording capable of overwrite.

Fig. 2 shows the relationship between bias magnetic field and C/N ratio (dB) of the present magnetooptical recording film having the composition represented by $Pt_{13}Tb_{28}Fe_{50}Co_9$ and of a magnetooptical recording film having the composition represented by $Tb_{25}Fe_{68}Co_7$.

It is understood from Fig. 2 that in the conventionally known magnetooptical recording film represented by $Tb_{25}Fe_{68}Co_9$, the C/N ratio is not saturated unless a bias magnetic field of more than 250 Oe is applied, whereas in the present magnetooptical recording film represented by $Pt_{13}Tb_{28}Fe_{50}Co_9$, recording can be performed even by a small bias magnetic field and the C/N ratio is saturated at a level of 120 Oe or more. In the following examples and comparative examples, a Hsat value of the minimum bias magnetic field of each magnetooptical recording film is shown in Table 1, at which the C/N ratio is saturated. The smaller is this Hsat value, it follows that the C/N ratio is saturated by a small bias magnetic field.

Fig. 3 shows the relationship between the content of Pt and/or Pd and the minimum bias magnetic field (Hsat, (Oe) ) of a magnetooptical recording film of PtTbFeCo system and of a magnetooptical recording film of PdTbFeCo system.

It is understood from Fig. 3 that the minimum bias magnetic field, Hsat, becomes sufficiently small when the content of Pt and/or Pd exceeds 10 atom%.

(ii) Rare earth element (RE)

In the present magnetooptical recording films, rare earth element (RE) is contained, and usable as the rare earth element is Nd, Sm, Pr, Ce, Eu, Gd, Tb, Dy or Ho.

Of the rare earth elements illustrated above, preferably usable are Nd, Pr, Gd, Tb and Dy, and particularly preferred is Tb. The rare earth elements may be used in combination of two or more, and in this case the combination preferably contains at least 50 atom% of Tb.

From the standpoint of obtaining an optical magnetism having an easy axis of magnetization perpendicular to the film, it is preferable that this rare earth element present in a magnetooptical recording film in such an amount as $0.25 \leqq x \leqq 0.45$, preferably

$0.3 \leq x \leq 0.4$, wherein x represents RE/(RE + Fe + Co) [atomic ratio].

(iii) Fe and/or Co

In the present magnetooptical recording films, Fe or Co or both are contained, and Fe and/or Co is preferably present in the magnetooptical recording film in an amount of at least 40 atom% but not more than 70 atom%, preferably at least 40 atom% but less than 60 atom%, and more preferably at least 40 atom% but not more than 59 atom%.

Further, Fe and/or Co present in the magnetooptical recording film is preferably in such an amount that Co/(Fe + Co) ratio [atomic ratio] is from 0 to 0.3, preferably from 0 to 0.2, and more preferably from 0.01 to 0.2.

When the amount of Fe and/or Co is in the range of at least 40 atom% but not more than 70 atom%, there is such an advantage that a magnetooptical recording film which is excellent in resistance to oxidation and has an easy axis of magnetization perpendicular to the film is obtained.

In this connection, when Co is incorporated into a magnetooptical recording film, there are observed such phenomena as (a) Curie point of the magnetooptical recording film increases and (b) Kerr-rotation angle ($\theta k$)

becomes large. As the result, recording sensitivity of a magnetooptical recording film can be adjusted by the amount of Co to be incorporated and, moreover, a carrier level of reproducing signal increases by incorporating Co. According to the study conducted by the present inventors, however, it has been found that when Co is incorporated excessively into a magnetooptical recording film, a noise level of reproducing signal rises and the C/N ratio decreases. Accordingly, in the present magnetooptical recording film, Co/(Fe + Co) ratio [atomic ratio] is from 0 to 0.3, preferably from 0 to 0.2, and more preferably from 0.01 to 0.2.

Fig. 4 shows the relationship between Co/(Co + Fe) ratio [atomic ratio] and noise level (dBm) in a magnetooptical recording film of PtTbFeCo system, and Fig. 5 shows the relationship between Co/(Co + Fe) ratio [atomic ratio] and noise level (dBm) in a magnetooptical recording film of PdTbFeCo system.

Concretely, in the present magnetooptical recording film (Co/(Fe + Co) ratio [atomic ratio]: 0.15) having the composition represented by $Pt_{13}Tb_{28}Fe_{50}Co_{9}$, the noise level is -56 dBm, whereas in a magnetooptical recording film (Co/(Fe + Co) ratio [atomic ratio]: 0.39) having the composition represented by $Pt_{13}Tb_{28}Fe_{36}Co_{23}$, the noise level is as large as -50 dBm. Furthermore, in the present magnetooptical recording film (Co/(Fe + Co) ratio [atomic ratio]: 0.12) having the composition represented by $Pd_{14}Tb_{27}Fe_{52}Co_{7}$, the noise level is -56 dBm, whereas in a magnetooptical recording film (Co/(Fe + Co) ratio [atomic ratio]: 0.31) having the composition represented by $Pd_{14}Tb_{27}Fe_{41}Co_{18}$, the noise level is as large as -51 dBm.

Furthermore, when the Co/(Fe + Co) ratio [atomic ratio] exceeds 0.3, erasion deterioration is observed in the resulting magnetooptical recording film. That is, the Co/(Fe + Co) ratio [atomic ratio] in a magnetooptical recording film which is larger than 0.3 or more strictly in excess of 0.2 is not preferable since the magnetooptical recording film sometimes subject to change of property when an energy with which said recording film is irradiated is made large in order to erase the information once recorded in the magnetooptical recording film.

Fig. 6 shows the relationship between Co/(Fe + Co) ratio [atomic ratio] and erasion deterioration ($\Delta$C/N ratio (dB) ) in a magnetooptical recording film.

In the concrete, no change in film property occurs at all even when the present magnetooptical recording film having the composition of $Pt_{13}Tb_{28}Fe_{50}Co_{9}$ (Co/(Fe + Co) ratio [atomic ratio] : 0.155) is irradiated with an increased energy at the time of erasing the information once recorded in the recording film, and even a new information having the same value, as a value of C/N ratio, as that prior to erasion can also be recorded on the erased recording film. In contrast thereto, in a magnetooptical recording film having the composition of $Pt_{13}Tb_{28}Fe_{40}Co_{19}$ or $Pt_{13}Tb_{28}Fe_{36}Co_{23}$ and containing Co in an amount of more than 0.3 in terms of Co/(Fe + Co) ratio [atomic ratio], change in film property occurs and magnetooptical characterisitcs decrease, and the C/N ratio of a newly recorded information will also becomes smaller than that of the information recorded prior to erasion when the information once recorded is erased with an energy larger than necessary.

Furthermore, no change in film property will occur even when recording and erasing the information are performed repeatedly. For instance, no decrease in C/N ratio is observed even when the recording and erasing operations are performed 100,000 times in the present magnetooptical recording film having the composition of $Pt_{13}Tb_{28}Fe_{50}Co_{9}$.

In the present invention, it is also possible to improve Curie temperature, compensation temperature, coercive force Hc or Kerr-rotation angle $\theta k$, or cheapen the cost of production by incorporating various elements into the magnetooptical recording films. These elements for the purpose intended may be used, for example, in the proportion of less than 10 atom% based on the total number of elements constituting the recording film.

Examples of useful elements for this purpose other than those constituents of the magnetooptical recording film include such elements as mentioned below.

(I) 3d transition elements other than Fe and Co

Concretely, such transition elements include Sc, Ti, V, Cr, Mn, Ni, Cu and Zn.

Of these elements exemplified above, preferably used are Ti, Ni, Cu and Zn.

(II) 4d transition elements other than Pd

Concretely, such transition elements include Y, Zr, Nb, Mo, Tc, Ru, Rh, Ag and Cd.

Of these transition elements exemplified above, preferably used are Zr and Nb.

(III) 5d transition elements other than Pt

Concretely, such transition elements include Hf, Ta, W, Re, Os, Ir, Au and Hg.

Of these transition elements, preferably used is Ta.

(IV) Group III B elements

Concretely, B, Al, Ga, In, and Tl are used.

Of these elements, preferably used are B, Al and Ga.

(V) Group IV B elements

Concretely, C, Si, Ge, Sn and Pb are used.

Of these elements, preferably used are Si, Ge, Sn and Pb.

(VI) Group V B elements

Concretely, N, P, As, Sb and Bi are used.

Of these elements, preferably used is Sb.

(VII) Group VI B elements

Concretely, S, Se, Te and Po are used.

Of these elements, preferably used is Te.

The composition of the recording film is determined by ICP emission spectroscopic analysis.

A process for preparing the magnetooptical recording films of the present invention is illustrated hereinafter.

The present magnetooptical recording films may be prepared by depositing a magnetooptical recording film having the predetermined composition on a substrate, wherein the substrate is maintained at about room temperature, and a composite target with chips of elements constituting the present magnetooptical recording film in the predetermined proportions thereon or an alloy target having the predetermined composition is deposited by the sputtering method or electron beam evaporation method on said substrate (this substrate may be fixed, or may rotates on its axis or may rotates on its axis while revolving).

The present magnetooptical recording films as illustrated above may be formed at room temperature, and the films as formed are not always in need of such heat treatment as annealing or the like that is usually required for allowing the films to have a magnetic easy axis perpendicular to the film.

If necessary, in this connection, an amorphous alloy thin film can also be formed on a substrate while heating the substrate to 50-600$^{\circ}$C, or while cooling the substrate to -50$^{\circ}$C.

At the time of sputtering, moreover, biasing a substrate is also possible so that the substrate comes to have a negative potential. By doing so, ions of an inert gas such as argon accelerated in the electric field will hit not only target substances but also a magnetooptical recording film being formed and consequently a magnetooptical recording film having excellent characteristics is sometimes obtained.

The alloy targets which are used for the preparation of the magnetooptical recording films of the present invention contain (i) Pt and/or Pd, (ii) a rare earth element, and (iii) Fe and/or Co, said Pt and/or Pd being present in an amount of more than 5 atom% but not more than 40 atom%, and said Fe and/or Co being present in an amount of at least 30 atom% but not more than 80 atom%, and have a Co/(Fe + Co) ratio [atomic ratio] of from 0 to 0.4.

Such alloy targets as illustrated above may be prepared by either the melting method or the sintering method by the use of the metals mentioned above.

The melting method is a process in which the metals are melted with a low-frequency melting furnace and then casted into targets, and the targets of better quality may be obtained when impurities such as oxygen and the like are removed from the molten metal by using a calcia crucible.

On one hand, the sintering method is a process of sintering metallic powder, in which the sintering of powder of each component metal, or powder of alloy of component metals, or of mixtures of powder of alloy of several kinds of metals and metals is effected to give desired alloy targets.

Such alloy targets as used in the present invention, in comparison with TbFeCo alloy targets, are excellent in resistance to oxidation and, moreover, excellent in toughness so that after casting and processing, the resulting alloy targets are prevented from their cracking. Accordingly, the alloy targets used in the present invention are not always in need of pre-sputtering that is required for the conventionally used TbFeCo alloy targets.

In the targets of the present invention, moreover, permeability of target becomes small so that the targets can be increased in thickness in comparison with the conventional TbFeCo alloy targets and utility efficiency of the present targets can also be enhanced.

In general, the composition of alloy target deviates from that of a film obtained from said alloy target to a maximum extent of 10 atom% according to the sputtering conditions employed. On that account, the composition of the alloy target is decided according to the composition of the film and to the sputtering conditions to be employed.

Since the magnetooptical recording films of the present invention have a magnetic easy axis perpendicular to the film, they are utilizable in such various fields as films, magnetic recording materials such as vertical magnetic recording magnetic bubble memories or magnetooptical recording films, and photomodulaters that utilize magnetooptical effects.

The present magnetooptical recording films having the compostion mentioned above have a magnetic easy axis perpendicular to the film and exhibit Kerr hysterisis loop of a favorable square-shaped form.

In the present specification, by "exhibition of Kerr hysterisis loop of a favorable square-shaped form" is meant that the $\theta k_2/\theta k_1$ ratio of the Kerr-rotation angle at a saturation magnetization ($\theta k_1$) in the maximum external magnetic field to the Kerr-rotation angle at a remanent magnetization ($\theta k_2$) in the external magnetic field of zero is at least than 0.8.

In the present invention, a thickness of magnetooptical recording film is desirably 20 Å - 5$\mu$m, preferably 50-5000 Å, and more preferably 100-3000 Å or thereabout.

The case where the present magnetooptical recording films have been utilized as recording films of magnetooptical discs in illustrated hereinafter.

The present magnetooptical recording films are film with a magnetization with easy axis perpendicular to the film and, at the same time, in most of them, Kerr hysterisis loop has a square-shaped form, $\theta$k under the circumstances where no external magnetic field exists is practically the same as $\theta$k at a saturation magnetization in the maximum external magnetic field, and also coercive force Hc is large, and hence they are suitable as magnetooptical recording films. Furthermore, that $\theta$k is favorable means that $\theta$f is also favorable, and accordingly the present magnetooptical recording films are utilizable in both of Kerr effect utilization system and Faraday effect utilization system.

Furthermore, since the present magnetooptical recording films are excellent in resistance to oxidation, they are not always in need of use of such protective film for prevention of oxidation as used in the conventional magnetooptical recording films comprising heavy rare earth elements and 3d transition metal alloys such as Tb-Fe, Tb-Fe-Co, etc. .

Moreover, it is not always necessary to use anti-oxidizing materials in a substrate adjacent to the recording film or other functional films (e.g. enhancing film and reflective film), or adhesive layers for lamination purposes.

Further, even when enhancing film and/or reflection film is formed on the present magnetooptical recording films, the film can be formed by the wet film forming method such as the spin or spray coating process that could not be employed in the conventional magnetooptical recording films, in addition to the dry film forming method such as vacuum evaporation or sputtering.

Accordingly, the structure of magnetooptical discs bearing the present magnetooptical recording films as recording films thereon may include such structures as mentioned below.

(i) Substrate/recording film,

(ii) Substrate/enhancing film/recording film,

(iii) Substrate/recording film/reflection film,

(iv) Substrate/enhancing film/recording film/ reflection film, and

(v) Substrate/enhancing film/recording film/ enhancing film/reflection film.

The magnetooptical discs having such structures illustrated above may also have on the outermost layer of the recording film side a protective film or protective lable for imparting scratch resistance or resistance to oxidation to said outermost layer.

The enhancing films may be of organic or inorganic materials so long as they have a refractive index larger than that of a substrate.

As the substrate, there may be used inorganic materials such as glass, aluminum, etc. and organic materials such as polymethyl methacrylate, polycarbonate, polymer alloy of polycarbonate and polystyrene, amorphous polyolefins as disclosed in U.S. Patent 4,614,778, poly-4-methyl-1-pentene, epoxy resin, polyether sulfone, polysulfone, polyether imide, etc.

The reflective films may be of any materials so long as they have a reflection index of at least 50%.

Further, the structure of the magnetooptical discs is not limited only to the structures (i) - (v) mentioned above, and the discs may be provided with a subbing layer, anti-oxidizing film or highly permeable soft magnetic film, if necessary, and the discs may be used either singly or in the form of a laminated disc obtained by bonding two discs each other.

It is also possible to prepare a magnetooptical recording film by providing two layers of magnetooptical recording films on a substrate. In that case, the magnetooptical recording film having this structure is preferably such that when coercive force and Curie temperature of a first magnetooptical recording film are taken as $Hc_1$ and $Tc_1$, respectively, and when coercive force and Curie temperature of a second magnetooptical recording film are taken as $Hc_2$ and $Tc_2$, respectively, the relationship of $Hc_1 > Hc_2$ and that of $Tc_1 < Tc_2$ are established and that an outer layer (a layer on the side opposite to a substrate, i.e., the second magnetooptical recording film) comprises such magnetooptical recording film as specified in the present invention.

The magnetooptical recording film having such 2-layer structure may be subject to overwrite. The recording process wherein such two-layer magnetooptical recording film is subjected to overwrite is illustrated below.

A magnetooptical recording apparatus has a magnetic field (Ha) generating an upward magnetic field (or a downward magnetic field) for writing, right below a head through which a laser light is irradiated and in front of said magnetic field, i.e. an upright side, a magnetic field (Hb) generating a downward magnetic field (or an upward magnetic field) having the relationship of $Hc_1 > Hb > Hc_2$.

The magnetooptical recording film first passes through above Hb, whereby magnetization direction of the second magnetooptical recording film is arranged downwardly (or upwardly). In that case, the magnetization direction of the first magnetooptical recording film does not change from the relationship of $Hc_1 > Hb$. Subsequently, the magnetooptical recording film, when it passes through above Ha, is irradiated with a laser light modulated either to a high level or low level in correspondence to an information signal. The high level laser light heats the magnetooptical recording film to a level higher than the Curie temperature $Tc_2$ of the second magnetooptical recording film, and hence both the magnetization directions of the first and second magnetooptical recording films are arranged by the weak magnetic field Ha to the magnetization direction of the weak magentic field, that is, upwardly (or downwardly). On one hand, the low level laser light heats the magnetooptical recording film only to a temperature higher than Curie temperature $Tc_1$ of the first magnetooptical recording film and less than $Tc_2$, and hence only the first magnetooptical recording film is magnetized by Ha, and the magnetization direction of the second magnetooptical recording film remains downwardly (or upwardly). Therefore, the magnetization direction of the first magnetooptical recording film, after passing through Ha and in the course of back to room temperature, reverse to the magnetization direction of the second magnetooptical recording film and turns downward (or upward). Accordingly, the magnetooptical recording film can be subjected to overwrite by modulating an energy level of laser light for writing.

Apart from the above-mentioned, in the case of a magnetooptical recording film having a two-layer structure wherein coercive force of a first magnetooptical layer (an inner layer) is smaller than that of a second magnetooptical recording film (an outer layer) and at least the outer layer (a layer on the side opposite to a substrate) comprises a magnetooptical recording film as defined in the present invention, the magnetooptical recording film so designed is found high in C/N ratio and excellent in long-term reliability. That is, a recording sensitivity depends on Curie point of the outer layer, the information recorded in the outer layer is transferred to the inner layer having a small coercive force and a large Kerr-rotation angle, and when the recorded information is read out, a high C/N ratio is obtained. In that case, to obtain a high C/N ratio, it is desirable that Kerr-rotation angle of the inner layer is at least 0.25 deg, preferably at least 0.3 deg, coercive force of the inner layer is not greater than 3 KOe, preferably not greater than 2 KOe, and coercive force of the outer layer is at least 3 KOe, preferably at least 4 KOe, and Curie point of the outer layer is 100-300°C.

In the magnetooptical recording film as mentioned above, recording sensitivity depends on Curie point of the second magnetooptical recording film, and because of a small coercive force, the information recorded in the second magnetooptical recording film is transferred to the first magnetooptical recording layer having a large Kerr-rotation angle, and a C/N ratio is obtained on reading-out of the transferred information.

The present invention is illustrated below with reference to examples, but it should be construed that the invention in no way limited to those examples.

Examples 1-25 and Comparative Examples 1-19

Using a composite target with chips of Pt and/or Pd and a rare earth element arranged in a predetermined proportion on Fe or Fe-Co target as a target, there was deposited on a glass substrate at 20-50°C by DC magnetron sputtering a magnetooptical recording film having the composition as denoted in Table 1. The condition under which the film was formed included Ar pressure of 5 m Torr., Ar flow rate of 3 sccm, ultimate degree of vacuum of not more than 5 x $10^{-6}$ Torr, and a film thickness of the alloy thin film of 1000 Å.

As a result of determination by the wide angle X-ray diffraction method, the magnetooptical films obtained were all amorphous. The composition of the recording films obtained was determined by ICP emission spectroscopic analysis.

The Kerr-rotation angle was measured by the inclination incidence method ( $\lambda$ = 780 nm) at a remanent magnetization in the external magnetic field of zero from the side of the glass substrate. A concrete method of measurement and apparatus therefor to be employed in the inclination incidence method are described in "Measuring Techniques of Magnetic Materials", compiled by Kazuo Yamakawa (published by Torikepps K.K. on December 15, 1985), pp.261-263.

Table 1 shows x value, Fe + Co amount (atomic %), Co/(Fe + Co) ratio [atomic ratio], Kerr-rotation angle ($\theta$k) and coercive force (Hc) of the magnetooptical recording films obtained.

Furthermore, on a substrate comprising an amorphous ethylene-tetracyclododecene copolymer was deposited a magnetooptical recording film having a predetermined composition by DC magnetic sputtering method to prepare a magnetooptical disc bearing a single layer of 1000 Å.

The magnetooptical disc obtained had a diameter of 130 mm, and using this magnetooptical disc, recording and reproducing were carried out with a driving apparatus (Nakamichi OMS-1000) under the conditions of recording frequency number 1 MHZ (Duty ratio 50%), linear speed of 11.1 m/s, bias magnetic field of 200 Oe at the time of writing, and readout laser power of 1.0 mW.

Table 1 also shows a carrier to noise ratio (C/N ratio) and noise level when the recording was carried out with a recording power (optimum recording power), of which a level of second harmonic frequency as measured by spectrum analyzer became minimum.

Then, the information recorded was erased with a power larger by 3.0 mW than this optimum recording power, and a new information was recorded on the erased recording film. This operation was repeated 10 times, and thereafter the difference between C/N ratio before and after erasion was measured and represented as $\Delta$ C/N ratio.

As regards bias magnetic field dependability, the bias magnetic field dependability (H sat) was obtained by a change in C/N ratio when the bias magnetic field under the above-mentioned conditions was changed upto 50-500 Oe.

Further, with the purpose of long-term reliability, the disc obtained was subjected to life test, wherein the disc was allowed to stand in an oven under the circumstances of high temperature and humidity of 80$^{\circ}$C and 85% RH, and after the lapse of 1000 hours, C/N ratio was measured to obtain the results as shown in Table 1.

Table 1 (1)

| Example | Composition | X Value | Fe+CO (atom%) | $\frac{Co}{Fe+Co}$ | K (deg) | Hc (k e) | C/N ratio (dB) | Hsat. (Oe) | N(dBm) | Erasion deterioration Δ C/N ration (dB) | After life test C/N ration (dB) |
|---|---|---|---|---|---|---|---|---|---|---|---|
| 1 | $Pt_{12}Tb_{30}Fe_{49}Co_9$ | 0.34 | 58 | 0.16 | 0.25 | 2.7 | 51 | 120 | -56 | 0 | 51 |
| 2 | $Pt_{17}Tb_{30}Fe_{44}Co_9$ | 0.36 | 53 | 0.17 | 0.23 | 2.9 | 50 | 120 | -56 | 0 | 50 |
| 3 | $Pt_{20}Tb_{30}Fe_{41}Co_9$ | 0.38 | 50 | 0.18 | 0.20 | 3.5 | 48 | 120 | -56 | 0 | 48 |
| 4 | $Pt_{13}Tb_{26}Fe_{61}$ | 0.30 | 61 | 0 | 0.22 | 3.3 | 48 | 120 | -56 | 0 | 48 |
| 5 | $Pt_{13}Tb_{27}Fe_{55}Co_5$ | 0.31 | 60 | 0.08 | 0.24 | 5.4 | 49 | 120 | -56 | 0 | 49 |
| 6 | $Pt_{13}Tb_{28}Fe_{50}Co_9$ | 0.32 | 59 | 0.15 | 0.26 | 8.5 | 50 | 120 | -56 | 0 | 50 |
| 7 | $Pt_{13}Tb_{28}Fe_{44}Co_{15}$ | 0.32 | 59 | 0.25 | 0.27 | 7.0 | 50 | 120 | -55 | -2 | 50 |
| Compar. Example 1 | $Tb_{25}Fe_{68}Co_7$ | 0.25 | 75 | 0.09 | 0.34 | 7.0 | 51 | 260 | -56 | 0 | * |
| 2 | $Tb_{30}Fe_{61}Co_9$ | 0.30 | 70 | 0.13 | 0.30 | 1.8 | 49 | 270 | -56 | 0 | * |
| 3 | $Pt_4\ Tb_{28}Fe_{59}Co_9$ | 0.29 | 68 | 0.13 | 0.33 | 2.3 | 51 | 200 | -56 | 0 | 39 |
| 4 | $Pt_6\ Tb_{28}Fe_{57}Co_9$ | 0.30 | 66 | 0.14 | 0.30 | 3.2 | 50 | 170 | -56 | 0 | 47 |
| 5 | $Pt_{13}Tb_{28}Fe_{40}Co_{19}$ | 0.32 | 59 | 0.32 | 0.30 | 6.0 | 48 | 120 | -52 | -4 | 48 |
| 6 | $Pt_{13}Tb_{28}Fe_{36}Co_{23}$ | 0.32 | 59 | 0.39 | 0.31 | 9.1 | 47 | 120 | -50 | -6 | 47 |
| 7 | $Pt_{13}Tb_{45}Fe_{36}Co_6$ | 0.51 | 42 | 0.14 | * | * | * | * | * | * | * |
| 8 | $Pt_{14}Tb_{15}Fe_{63}Co_8$ | 0.17 | 71 | 0.11 | * | * | * | * | * | * | * |
| 9 | $Pt_{34}Tb_{30}Fe_{31}Co_5$ | 0.45 | 36 | 0.14 | * | * | * | * | * | * | * |

* Kerr hysterisis does not exhibit a favorable square-shaped form.

Table 1 (2)

| Example | Composition | X Value | Fe+CO (atom%) | Co / Fe+Co | K (deg) | Hc (k e) | C/N ratio (dB) | Hsat. (Oe) | N(dBm) | Erasion deterioration ΔC/N ration (dB) | After life test C/N ration (dB) |
|---|---|---|---|---|---|---|---|---|---|---|---|
| 8 | $Pt_{12}Nd_{10}Tb_{23}Fe_{46}Co_9$ | 0.38 | 55 | 0.16 | 0.24 | 5.0 | 50 | 100 | -56 | 0 | 50 |
| 9 | $Pt_{12}Pr_8 Dy_{26}Fe_{45}Co_9$ | 0.39 | 54 | 0.17 | 0.21 | 3.1 | 48 | 100 | -56 | 0 | 48 |
| 10 | $Pt_{14}Gd_3 Tb_{26}Fe_{52}Co_5$ | 0.34 | 57 | 0.09 | 0.25 | 4.2 | 50 | 120 | -56 | 0 | 50 |
| 11 | $Pt_{14}Dy_3 Tb_{25}Fe_{51}Co_9$ | 0.33 | 58 | 0.12 | 0.24 | 8.6 | 50 | 120 | -56 | 0 | 50 |
| 12 | $Pt_{12}Dy_{30}Fe_{30}Co_8$ | 0.34 | 58 | 0.14 | 0.22 | 2.0 | 49 | 100 | -56 | 0 | 49 |

Table 1 (3)

| Example | Composition | X Value | Fe+CO (atom%) | Co / Fe+Co | K (deg) | Hc (k e) | C/N ratio (dB) | Hsat. (Oe) | N(dBm) | Erasion deterioration Δ C/N ration (dB) | After life test C/N ration (dB) |
|---|---|---|---|---|---|---|---|---|---|---|---|
| 13 | $Pd_{11}Tb_{32}Fe_{48}Co_{9}$ | 0.36 | 57 | 0.16 | 0.32 | 2.6 | 51 | 150 | -56 | 0 | 51 |
| 14 | $Pd_{12}Tb_{28}Fe_{53}Co_{7}$ | 0.32 | 60 | 0.12 | 0.31 | 2.3 | 51 | 140 | -56 | 0 | 51 |
| 15 | $Pd_{14}Tb_{27}Fe_{52}Co_{7}$ | 0.31 | 59 | 0.12 | 0.31 | 7.2 | 51 | 130 | -56 | 0 | 51 |
| 16 | $Pd_{16}Tb_{26}Fe_{51}Co_{7}$ | 0.31 | 58 | 0.12 | 0.30 | 8.0 | 50 | 130 | -56 | 0 | 50 |
| 17 | $Pd_{18}Tb_{28}Fe_{48}Co_{6}$ | 0.34 | 54 | 0.11 | 0.28 | 1.9 | 50 | 120 | -56 | 0 | 50 |
| 18 | $Pd_{20}Tb_{27}Fe_{46}Co_{7}$ | 0.34 | 53 | 0.13 | 0.24 | 2.5 | 49 | 120 | -56 | 0 | 49 |
| 19 | $Pd_{24}Tb_{26}Fe_{43}Co_{7}$ | 0.34 | 50 | 0.14 | 0.21 | 3.9 | 48 | 120 | -56 | 0 | 48 |
| 20 | $Pd_{26}Tb_{29}Fe_{40}Co_{5}$ | 0.39 | 45 | 0.11 | 0.20 | 3.0 | 43 | 120 | -56 | 0 | 43 |
| 21 | $Pd_{10}Pt_{4}\ Tb_{27}Fe_{50}Co_{9}$ | 0.32 | 59 | 0.15 | 0.31 | 6.0 | 51 | 140 | -56 | 0 | 51 |
| 22 | $Pd_{13}Dy_{28}Fe_{51}Co_{8}$ | 0.32 | 59 | 0.14 | 0.30 | 7.1 | 51 | 140 | -56 | 0 | 51 |
| 23 | $Pd_{12}Nd_{10}Dy_{19}Fe_{51}Co_{8}$ | 0.33 | 59 | 0.14 | 0.31 | 9.4 | 49 | 140 | -56 | 0 | 49 |
| 24 | $Pd_{13}Tb_{15}Gb_{14}Fe_{52}Co_{6}$ | 0.33 | 58 | 0.10 | 0.30 | 8.1 | 49 | 130 | -56 | 0 | 49 |
| 25 | $Pd_{14}Tb_{27}Fe_{45}Co_{14}$ | 0.32 | 59 | 0.23 | 0.31 | 2.5 | 50 | 140 | -55 | -1 | 50 |

Table 1 (4)

| Compar. Example | Composition | X Value | Fe+CO (atom%) | Co / Fe+Co | K (deg) | Hc (k e) | C/N ratio (dB) | Hsat. (Oe) | N(dBm) | Erasion deterioration Δ C/N ration (dB) | After life test C/N ration (dB) |
|---|---|---|---|---|---|---|---|---|---|---|---|
| 10 | $Tb_{29}Fe_{63}Co_{8}$ | 0.29 | 71 | 0.11 | 0.34 | 2.2 | 51 | 250 | -56 | 0 | * |
| 11 | $Pd_{3}Tb_{27}Fe_{61}Co_{9}$ | 0.28 | 70 | 0.13 | 0.34 | 3.1 | 50 | 220 | -56 | 0 | * |
| 12 | $Pd_{4.5}Tb_{27.5}Fe_{60}Co_{8}$ | 0.36 | 68 | 0.12 | 0.33 | 4.0 | 50 | 200 | -56 | 0 | 36 |
| 13 | $Pd_{6}Tb_{28}Fe_{58}Co_{8}$ | 0.30 | 66 | 0.12 | 0.34 | 2.6 | 51 | 180 | -56 | 0 | 41 |
| 14 | $Pd_{8}Tb_{27}Fe_{58}Co_{7}$ | 0.29 | 65 | 0.11 | 0.33 | 4.3 | 51 | 150 | -56 | 0 | 47 |
| 15 | $Pd_{32}Tb_{25}Fe_{40}Co_{3}$ | 0.37 | 43 | 0.07 | * | * | * | * | * | * | * |
| 16 | $Pd_{5}Tb_{19}Fe_{68}Co_{8}$ | 0.20 | 76 | 0.11 | * | * | * | * | * | * | * |
| 17 | $Pd_{14}Tb_{27}Fe_{41}Co_{18}$ | 0.31 | 59 | 0.31 | 0.32 | 8.0 | 49 | 130 | -53 | -7 | 49 |
| 18 | $Pd_{15}Tb_{19}Fe_{61}Co_{5}$ | 0.22 | 66 | 0.08 | * | * | * | * | * | * | * |
| 19 | $Pd_{16}Tb_{39}Fe_{41}Co_{4}$ | 0.46 | 45 | 0.08 | * | * | * | * | * | * | * |

* Kerr hysterisis does not exhibit a favorable square-shaped form.

Example 26

On an amorphous polyolefin substrate were deposited a film comprising $Pt_{13}Tb_{28}Fe_{55}Co_4$ as a first magnetooptical recording film and a film comprising $Pt_{13}Tb_{30}Fe_{48}Co_9$ as a second magnetooptical recording film so that the second magnetooptical recording film became an outer layer. In this case, the magnetooptical recording film thus prepared had such relation that coercive force of the first magnetooptical recording film is larger than that of the second magnetooptical recording film, and Curie temperature of the first magnetooptical film is lower than that of the second magnetooptical recording film.

Then, using a disc drive having an upward magnetic field (0.2 KOe) for writing and a downward magnetic field (5 KOe) provided adjacent to an upright side of said upward magnetic field larger than coercive force of the second magnetooptical recording film and smaller than coercive force of the first magnetooptical recording film, the abovementioned magnetooptical disc was subjected to overlight under the conditions of linear speed of 11 m/s, low laser power of 4 mW, and high level laser power of 6 mW by single beam modulation, whereupon the overwrite was possible.

Furthermore, this magnetooptical recording disc was subjected to life test, wherein the disc was allowed to stand under the circumstances of 80°C and 85% RH for 1000 hours, whereupon no change in recording characteristics was observed.

Example 27

In the same procedure as described in Example 25, a film comprising $Pt_5Tb_{20}Fe_{60}Co_{15}$ was deposited to a film thickness of 300 Å as a first magnetooptical recording film and a film comprising $Pt_{13}Tb_{28}Fe_{51}Co_8$ was deposited to a film thickness of 800 Å as a second magnetooptical recording film (an outer layer).

This first magnetooptical recording film thus deposited had $\theta k$ of 0.40°, Hc of 1.2 KOe, and Tc of 270°C. The second magnetooptical recording film thus deposited had $\theta k$ of 0.24°, Hc of 8.3 KOe, and Tc of 170°C.

The magnetooptical recording film thus prepared had a C/N ratio of 55 dB.

The magnetooptical disc bearing the above magnetooptical recording film thereon was subjected to life test, wherein the disc was allowed to stand under the circumstances of 80°C and 85% RH for 1000 hours, whereupon no change in recording characteristics was observed.

What is claimed is:

1. A magnetooptical recording film which comprises

(i) Pt and/or Pd,

(ii) rare earth element (RE), and

(iii) Fe and/or Co, said Pt and/or Pd being present in an amount of more than 10 atom% but not more than 30 atom%, said Fe and/or Co being present in an amount of at least 40 atom% but not more than 70 atom%, and having a Co/(Fe + Co) ratio [atomic ratio] of from 0 to 0.3.

2. The magnetooptical recording film as claimed in claim 1 wherein a crystalline state of said recording film is substantially amorphous.

3. The magnetooptical recording film as claimed in claim 1 or 2 wherein Pt and/or Pd is present in an amount of more than 10 atom% but less than 20 atom%.

4. The magnetooptical recording film as claimed in claim 1 or 2 wherein Pt and/or Pd is present in an amount of from 11 to 19 atom%.

5. The magnetooptical recording film as claimed in claim 1 or 2 wherein Fe and/or Co is present in an amount of at least 40 atom% but less than 60 atom%.

6. The magnetooptical recording film as claimed in claim 1 or 2 wherein the Co/(Fe + Co) ratio [atomic ratio] is from 0 to 0.2.

7. The magnetooptical recording film as claimed in claim 1 or 2 wherein the Co/(Fe + Co) ratio [atomic ratio] is from 0.01 to 0.2.

8. The magnetooptical recording film as claimed in claim 1 or 2 wherein the rare earth element is Nd, Sm, Pr, Ce, Eu, Gd, Tb, Dy or Ho.

9. A magnetooptical recording film characterized in that said recording film is of a two-layer structure comprising first and second magnetooptical recording films wherein the relation of $Hc_1>Hc_2$ and that of $Tc_1<Tc_2$ are established when coercive force and Curie's temperature of the first magnetooptical recording film are taken as $Hc_1$ and $Tc_1$ and coercive force and Curie's temperature of the second magnetooptical recording film are taken as $Hc_2$ and $Tc_2$, respectively, and at least the outer layer (a layer on the side opposite to a substrate, that is, the second magnetooptical recording film) contains

(i) Pt and/or Pd,

(ii) rare earth element (RE), and

(iii) Fe and/or Co, wherein Pt and/or Pd is present in an amount of more than 10 atom% but not more than 30 atom%, Fe and/or Co is present in an amount of at least 40 atom% but not more than 70 atom%, and a Co/(Fe + Co) ratio [atomic ratio] is from 0 to 0.3.

10. The magnetooptical recording film as claimed in claim 9 wherein a crystalline state of the second magnetooptical recording film is amorphous.

11. The magnetooptical recording film as claimed in claim 9 or 10 wherein the second magnetooptical recording film contains Pt and/or Pd in an amount of more than 10 atom% but less than 20 atom%.

12. The magnetooptical recording film as claimed in claim 9 or 10 wherein the second magnetooptical recording film contains Pt and/or Pd in an amount of 11-19 atom%.

13. The magnetooptical recording film as claimed in claim 9 or 10 wherein the second magnetooptical recording film contains Fe and/or Co in an amount of at least 40 atom% but less than 60 atom%.

14. The magnetooptical recording film as claimed in claim 9 or 10 wherein the Co/(Fe + Co) ratio [atomic ratio] in the second magnetooptical recording film is from 0 to 0.2.

15. The magnetooptical recording film as claimed in claim 9 or 10 wherein the Co/(Fe + Co) ratio [atomic ratio] in the second magnetooptical recording film is from 0.01 to 0.2.

16. The magnetooptical recording film as claimed in claim 9 or 10 wherein the rare earth element contained in the second magnetooptical recording film is Nd, Sm, Pr, Ce, Eu, Gd, Tb, Dy or Ho.

17. A magnetooptical recording film characterized in that said recording film is of a two-layer structure comprising first and second magnetooptical recording films wherein coercive force of the first magnetooptical recording film (an inner layer) is smaller than that of the second magnetooptical recording film (an outer layer) and at least the outer layer (a layer on the side opposite to a substrate) contains

(i) Pt and/or Pd,

(ii) rare earth element (RE), and

(iii) Fe and/or Co, wherein Pt and/or Pd is present in an amount of more than 10 atom% but not more than than 30 atom%, Fe and/or Co is present in an amount of at least 40 atom% but not more than 70 atom%, and a Co/(Fe + Co) ratio [atomic ratio] is from 0 to 0.3.

18. The magnetooptical recording film as claimed in claim 17 wherein a crystalline state of the second magnetooptical recording film is substantially amorphous.

19. The magnetooptical recording film as claimed in claim 17 or 18 wherein the second magnetooptical recording film contains Pt and/or Pd in an amount of more than 10 atom% but less than 20 atom%.

20. The magnetooptical recording film as claimed in claim 17 or 18 wherein the second magnetooptical recording film contains Pt and/or Pd in an amount of from 11 to 19 atom%.

21. The magnetooptical recording film as claimed in claim 17 or 18 wherein the second magnetooptical recording film contains Fe and/or Co in an amount of at least 40 atom% but less than 60 atom%.

22. The magnetooptical recording film as claimed in claim 17 or 18 wherein the Co/(Fe + Co) ratio [atomic ratio] in the second magnetooptical recording film is from 0 to 0.2.

23. The magnetooptical recording film as claimed in claim 17 or 18 wherein the Co/(Fe + Co) ratio [atomic ratio] in the second magnetooptical recording film is from 0.01 to 0.2.

24. The magnetooptical recording film as claimed in claim 17 or 18 wherein the rare earth element contained in the second magnetooptical recording film is Nd, Sm, Pr, Ce, Eu, Gd, Tb, Dy or Ho.

25. An alloy target containing (i) Pt and/or Pd, (ii) a rare earth element and (iii) Fe and/or Co, wherein Pt and/or Pd is present in an amount of more than 5 atom% but not more than 40 atom%, Fe and/or Co is present in an amount of at least 30 atom% but not more than 80 atom%, and a Co/(Fe + Co) ratio [atomic ratio] is from 0 to 0.4.

# FIG.1

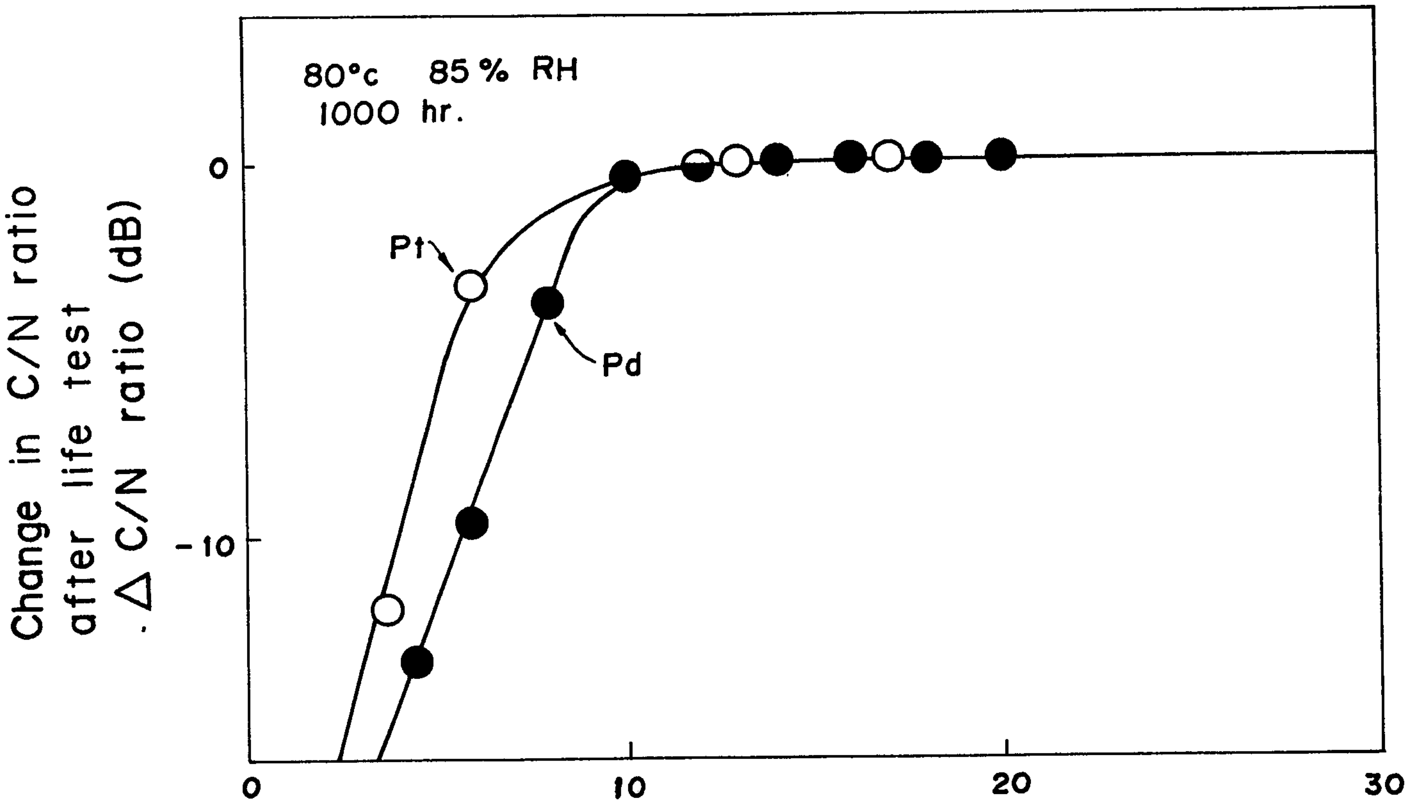


(Notes) In the figure above, the mark of ◒ denotes a point at which Pt bearing the mark of ○ coincides with Pd bearing the mark of ●

F I G. 2

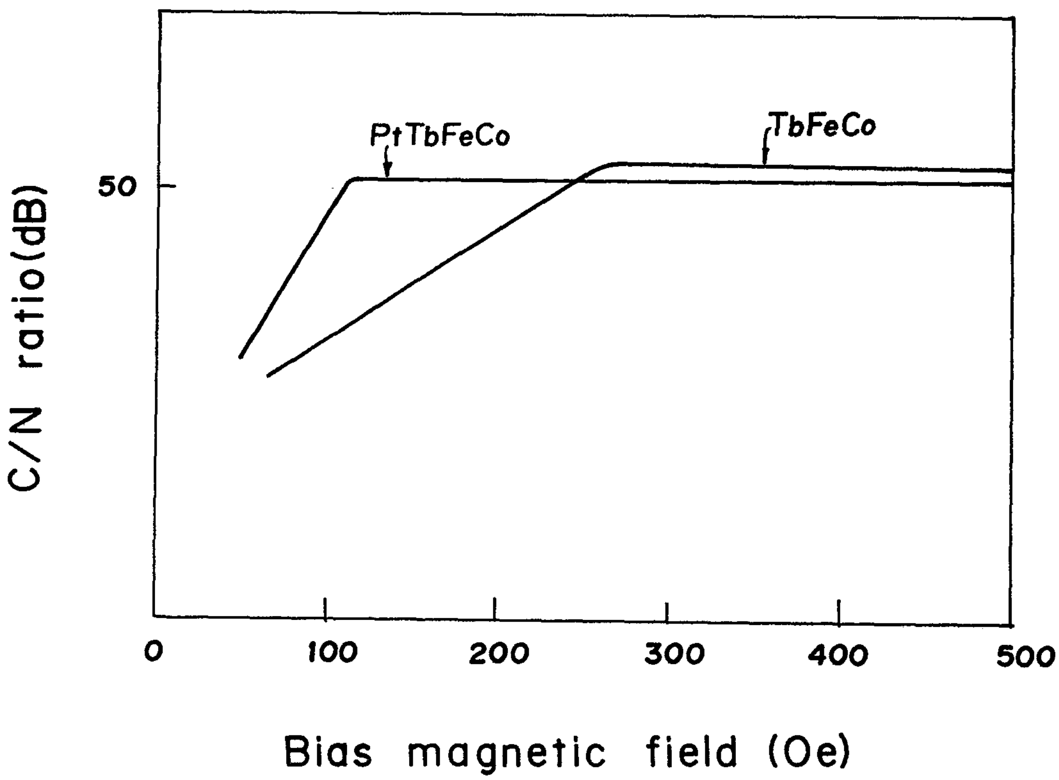
PtTbFeCo
TbFeCo
50
C/N ratio(dB)
0
100
200
300
400
500
Bias magnetic field (Oe)

FIG.3

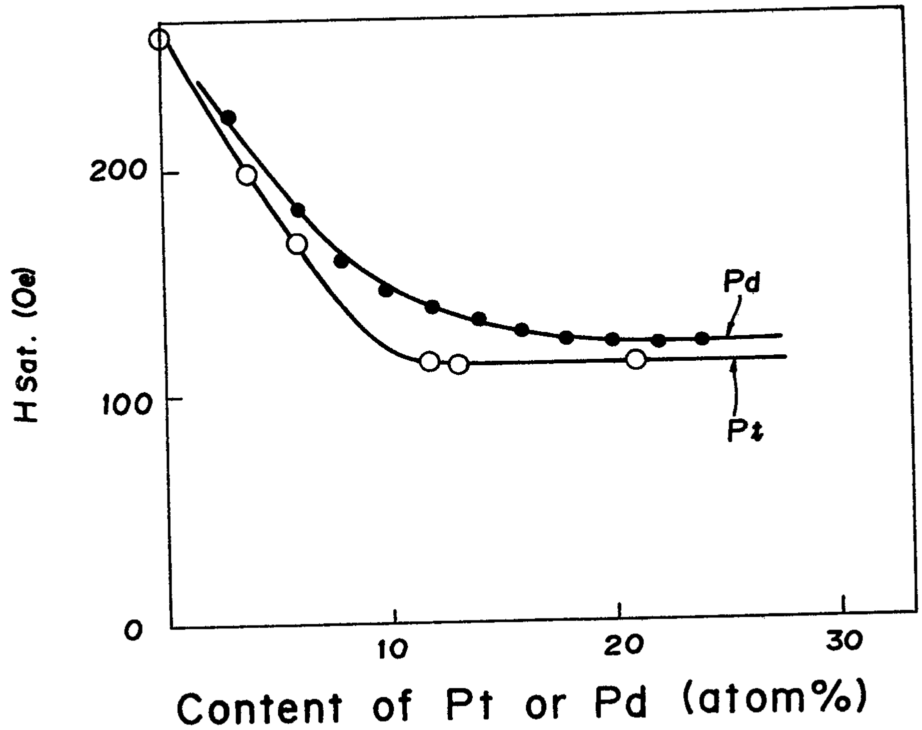
H Sat. (Oe)
200
100
0
10
20
30
Pd
Pt
Content of Pt or Pd (atom%)

FIG.4

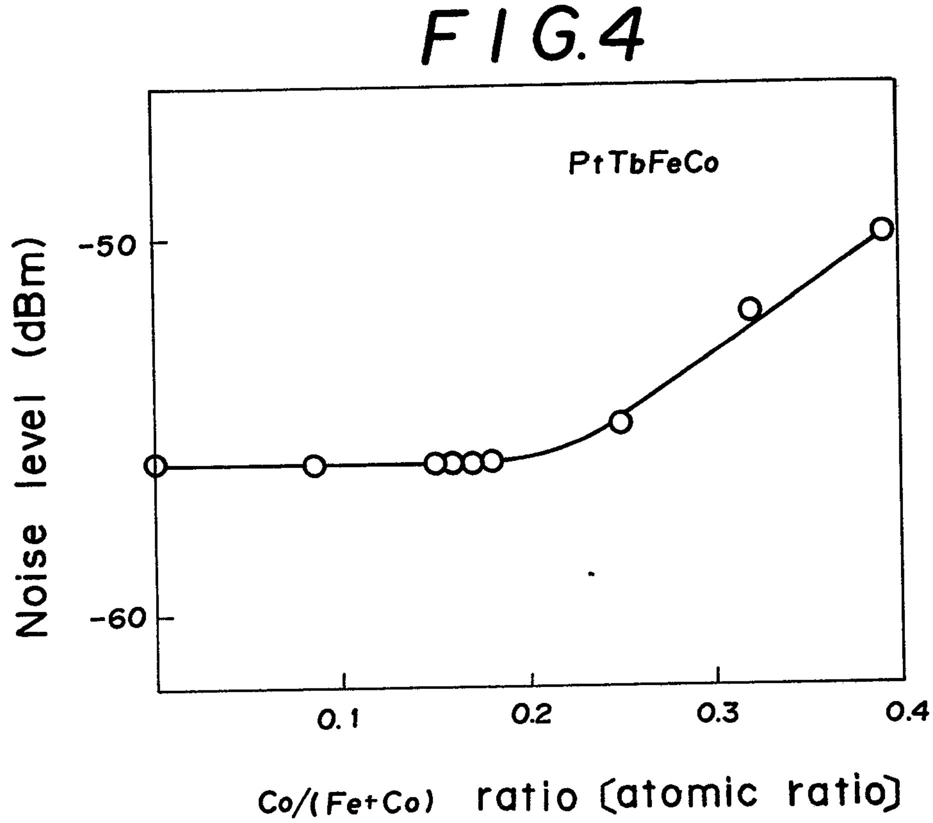
PtTbFeCo
Noise level (dBm)
-50
-60
0.1
0.2
0.3
0.4
Co/(Fe+Co) ratio (atomic ratio)

# FIG. 5

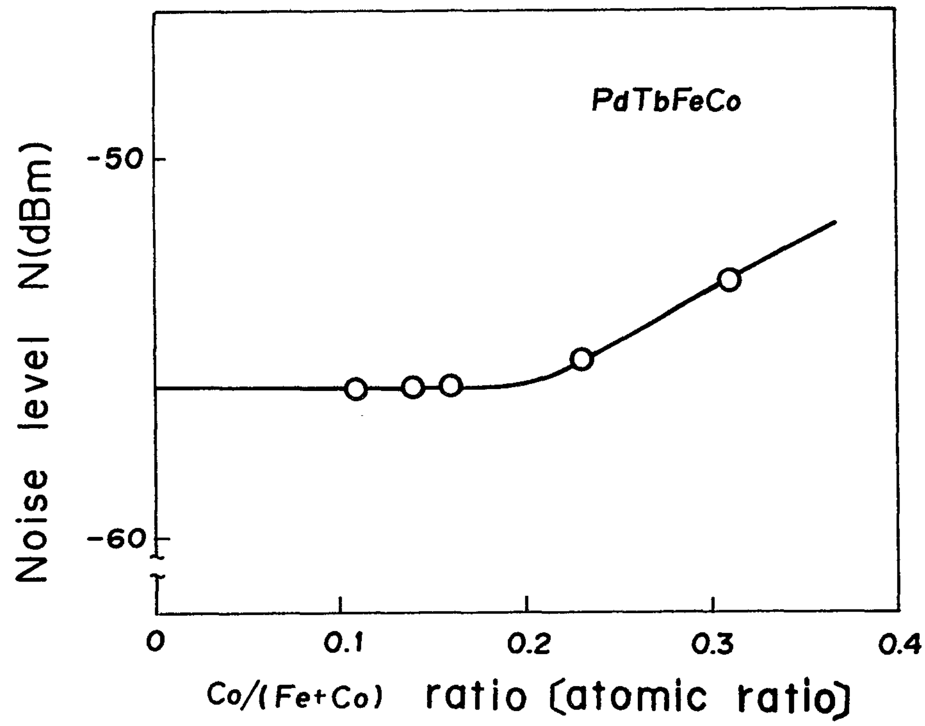


# FIG. 6

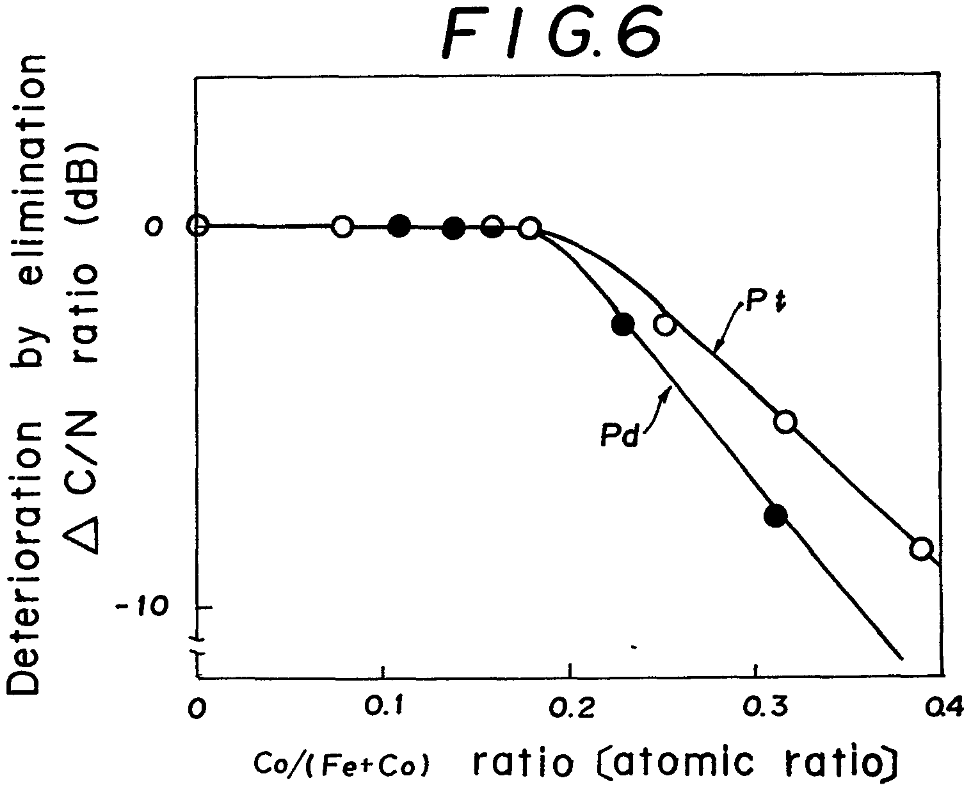


(Notes) In the figure above, the mark of ◒ denotes a point at which Pt bearing the mark of ○ coincides with Pd bearing the mark of ●

0310680

# INTERNATIONAL SEARCH REPORT

International Application No PCT/JP88/00379

**I. CLASSIFICATION OF SUBJECT MATTER** (if several classification symbols apply, indicate all) [6]

According to International Patent Classification (IPC) or to both National Classification and IPC

Int. $Cl^4$ G11B11/10

**II. FIELDS SEARCHED**

Minimum Documentation Searched [7]

| Classification System | Classification Symbols |
|---|---|
| IPC | G11B11/10 |

Documentation Searched other than Minimum Documentation to the Extent that such Documents are Included in the Fields Searched [8]

Jitsuyo Shinan Koho 1963 - 1987
Kokai Jitsuyo Shinan Koho 1971 - 1987

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 59-84358 (Seiko Instruments & Electronics Ltd.) 16 May, 1984 (16.05.84) (Family: none) | 1-8, 25 |
| X | JP, A, 60-253040 (Toshiba Corp.) 13 December, 1985 (13.12.85) (Family: none) | 1-8, 25 |
| Y | JP, A, 59-84358 (Seiko Instruments & Electronics Ltd.) 16 May, 1984 (16.05.84) (Family: none) | 9-24 |
| Y | JP, A, 60-253040 (Toshiba Corp.) 13 December, 1985 (13.12.85) (Family: none) | 9-24 |
| Y | JP, A, 57-78652 (Daido Steel Co., Ltd.) 17 May, 1982 (17.05.82) &EP, A1, 51296 & AT, E, 13784 | 9-24 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| June 27, 1988 (27.06.88) | July 25, 1988 (25.07.88) |
| **International Searching Authority** | **Signature of Authorized Officer** |
| Japanese Patent Office | |

International Application No. PCT/JP88/00379

**FURTHER INFORMATION CONTINUED FROM THE SECOND SHEET**

| | | |
|---|---|---|
| Y | JP, A, 61-117747 (Nippon Kogaku Kabushiki Kaisha)<br>5 June, 1986 (05.06.86)<br>(Family: none) | 9-24 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers........., because they relate to subject matter [12] not required to be searched by this Authority, namely:

2.☐ Claim numbers........., because they relate to parts of the international application that do not comply with the prescribed requirements to such an extent that no meaningful international search can be carried out [13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.